# EUROPEAN PATENT APPLICATION

(11) **EP 1 486 357 A1**
(43) Date of publication of application: **15.12.2004**
(21) Application number: 04013474.4
(22) Date of filing: 08.06.2004
(51) Int. Cl.: B60C 23/04

(54) **Sender eines Reifenzustandsüberwachungsgerätes und Reifenzustandsüberwachungsgerät**

(30) Priority: 11.06.2003 JP 2003166666
(71) Applicant: Pacific Industrial Co., Ltd., Ogaki-shi, Gifu-ken 503-8603 (JP)
(72) Inventor: Tsujita, Yasuhisa, Ogaki-shi Gifu-ken 503-8603 (JP)
(74) Representative: Breit, Ulrich, Dr.

(57) **Abstract**

A transmitter (30) of a tire condition monitoring apparatus (1) wirelessly transmits transmission data containing air pressure data of a tire (20). The wireless transmission of the transmission data is performed when a reception antennal (35) in the transmitter receives a trigger signal transmitted by an initiator (60). The reception antenna is arranged relative to the tire such that the orientation of the directivity of the reception antenna is constant irrespective of a rotation angle of the tire. Therefore, the transmitter operates reliably irrespective of the rotation angle of the tire.

## Description

### BACKGROUND OF THE INVENTION

The present invention relates to an apparatus for monitoring the condition of tires mounted to a vehicle, and a transmitter used in the apparatus.

Wireless tire condition monitoring apparatuses that allow a driver in a vehicle passenger compartment to check the conditions of vehicle tires, such as the internal pressure and internal temperature, have been used. Such a tire condition monitoring apparatus includes transmitters and a receiver. Each transmitter is located in the wheel of one of the tires of a vehicle, and the receiver is located in the body frame of the vehicle. Each transmitter detects the conditions of the associated tire, and wirelessly transmits the detected information. The receiver receives data transmitted by the transmitters. When receiving the data, the receiver controls a display located in front of the driver's seat to display the received data, and stores the data in a nonvolatile memory. When receiving a predetermined signal from an external communication device, the receiver wirelessly transmits data stored in the nonvolatile memory to the external communication device. In this manner, information detected by the transmitters is readily extracted from the receiver using an external communication device (for example, refer to Japanese Laid-Open Patent Publication No. 2001-108551).

As described above, the external communication device is used for extracting data stored in the receiver. The external communication device is designed to extract data from a receiver on a vehicle while the vehicle is not moving, but not designed to extract data from a receiver on a moving vehicle.

On the other hand, some tire condition monitoring apparatuses have initiators that transmit trigger signals for triggering wireless transmission of transmitters. Initiators are located outside of tires (for example, in mudguards). Each transmitter receives a trigger signal from a corresponding initiator with a reception antenna. However, since the position of the reception antenna relative to the corresponding initiator is varied according to the rotation angle of the tire, the sensitivity of the reception antenna is likely to be changed according to the rotation angle of the tire. This hinders reliable operation of the transmitter.

### SUMMARY OF THE INVENTION

Accordingly, it is an objective of the present invention to provide a transmitter that operates reliably irrespective of the rotation angle of a tire, and to a tire condition monitoring apparatus having such transmitters.

To achieve the above objective, the present invention provides a transmitter for wirelessly transmitting data related to a condition of a tire of a vehicle. The transmitter includes a sensor, a reception section, and a transmission section. The sensor is located in the tire and detects the condition of the tire. The reception section receives a trigger signal transmitted by an initiator. The initiator is located outside of the tire. The reception section has a directivity in a predetermined orientation. When the reception section receives the trigger signal. The transmission section is triggered to wirelessly transmit the data related to the tire condition detected by the sensor. The reception section is arranged relative to the tire such that the orientation of the directivity of the reception section is constant irrespective of a rotation angle of the tire.

The present invention also provides a tire condition monitoring apparatus. The apparatus includes an initiator that is located outside of the tire and transmits a trigger signal, the above transmitter, and a receiver that for receiving data wirelessly transmitted by the transmitter.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a block diagram showing a tire condition monitoring apparatus;
Fig. 2 is a block diagram showing a transmitter of the tire condition monitoring apparatus shown in Fig. 1;
Fig. 3 is a perspective view showing the transmitter of Fig. 2 attached to a tire wheel;
Fig. 4 is a block diagram showing a receiver of the tire condition monitoring apparatus shown in Fig. 1;
Fig. 5(a) is a side view of a vehicle on which the tire condition monitoring apparatus shown in Fig. 1; and
Fig. 5(b) is a bottom view showing the vehicle of Fig. 5(a).

### DETAILED DESCRIPTION OF THE PREFERRED EMBODIMENTS

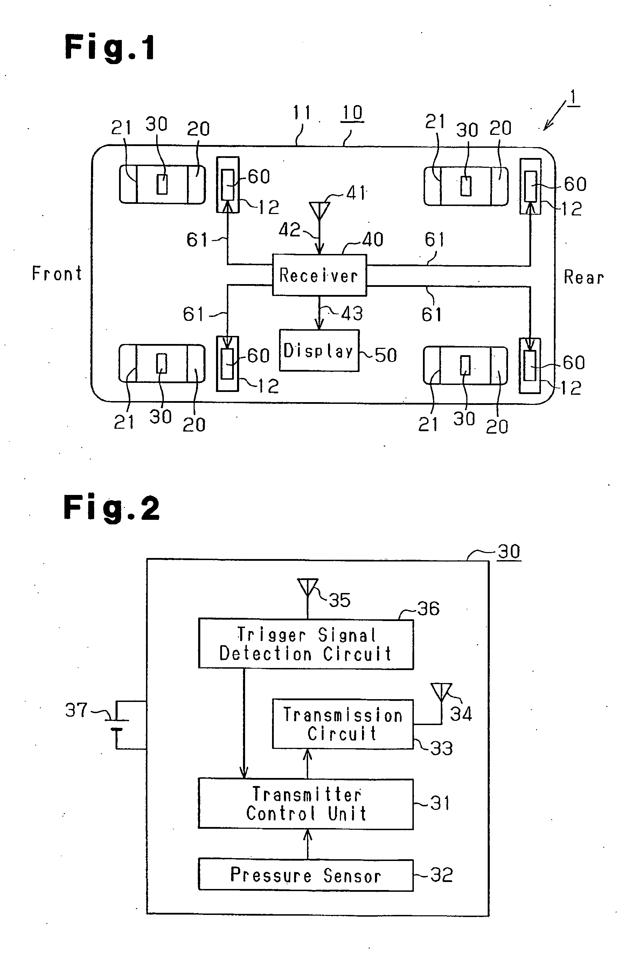

A tire condition monitoring apparatus 1 according to one embodiment of the present invention will now be described with reference to the drawings. As shown in Fig. 1, the tire condition monitoring apparatus 1 is mounted to a vehicle 10, which is, for example, an automobile. The tire condition monitoring apparatus 1 includes four transmitters 30 and a receiver 40.

Each transmitter 30 is provided in one of four tires 20 that are attached to the vehicle 10. Each transmitter 30 is located in the corresponding tire 20 and is fixed, for example, to a wheel 21 of the tire 20. Each transmitter 30 detects the condition of the associated tire 20, or the internal pressure, and wirelessly transmits a transmission signal including data that indicates the detected pressure.

The receiver 40 is mounted to a body 11 of the vehicle 10. The receiver 40 is driven, for example, by electricity of a battery (not shown) of the vehicle 10. The receiver 40 has a reception antenna 41. The reception antenna 41 is connected to the receiver 40 with a cable 42. The receiver 40 receives data transmitted by the transmitters 30 through the reception antenna 41.

A display 50 is located in an area of the vehicle 10 that is in the view of the driver, for example, in the passenger compartment. The display 50 is connected to the receiver 40 with a cable 43.

The receiver 40 has four initiators 60, each of which corresponds to different one of the transmitters 30. Each initiator 60 is located in a portion of the vehicle 10 that is close to the tire 20 in which the corresponding transmitter 30 is accommodated. For example, the initiators 60 are located in mudguards 12. Each initiator 60 includes a coil, which is formed by winding a wire a predetermined number of times around a ferrite core. The longitudinal direction of the coil of each initiator 60 is parallel to the rotation axis of the corresponding tire 20. In other words, each initiator 60 has a directivity the orientation of which is parallel to the rotation axis of the corresponding tire 20. Each initiator 60 is connected to the receiver 40 with a cable 61. Each initiator 60 periodically (for example, every fifteen seconds) transmits a trigger signal according to control of a receiver control unit 44 in the receiver 40. The receiver control unit 44 is described below.

As shown in Fig. 2, each transmitter 30 includes a transmitter control unit 31, a pressure sensor 32, a transmission circuit 33, a transmission antenna 34, a trigger signal reception antenna 35 (reception section), a trigger signal detection circuit 36, and a battery 37. The transmitter control unit 31, the transmission circuit 33, and the transmission antenna 34 form a transmission section. The transmitter control unit 31 is, for example, a microcomputer that includes a central processing unit (CPU), a read only memory (ROM), and a random access memory (RAM). A unique ID code is registered in an internal memory, for example, the ROM, of the transmitter control unit 31. The ID codes are used to distinguish between the transmitters 30.

The pressure sensor 32 measures the air pressure in the interior of the associated tire 20 and provides the transmitter control unit 31 with data of the measured pressure. Each transmitter control unit 31 sends transmission data containing the air pressure data from the pressure sensor 32 and the ID code registered in the internal memory to the transmission circuit 33. A transmission circuit 33 encodes and modulates the transmission data, and then wirelessly transmits the date through the transmission antenna 34.

The trigger signal reception antenna 35 induces a voltage that corresponds to the electric field strength of received radio waves, and outputs the induced voltage signal to the trigger signal detection circuit 36. The trigger signal reception antenna 35 includes a coil, which is formed by winding a wire a predetermined number of times around a ferrite core. The trigger signal detection circuit 36 detects a trigger signal from the associated initiator 60 through the trigger signal reception antenna 35. When detecting a trigger signal, the trigger signal detection circuit 36 sends to the transmitter control unit 31 a signal representing the detection of the trigger signal. The transmitter 30 is driven by electricity of the battery 37.

When detecting a trigger signal, the transmitter control unit 31 controls the pressure sensor 32 to measure the internal pressure of the tire 20. The transmitter control unit 31 controls the transmission circuit 33 to perform periodic transmission every time the pressure sensor 32 completes a predetermined number of (e.g., forty cycles of) measurements. Further, the transmitter control unit 31 causes the transmission circuit 33 to perform transmission irrespective of the periodic transmission when the air pressure in the associated tire 20 is recognized as being abnormal.

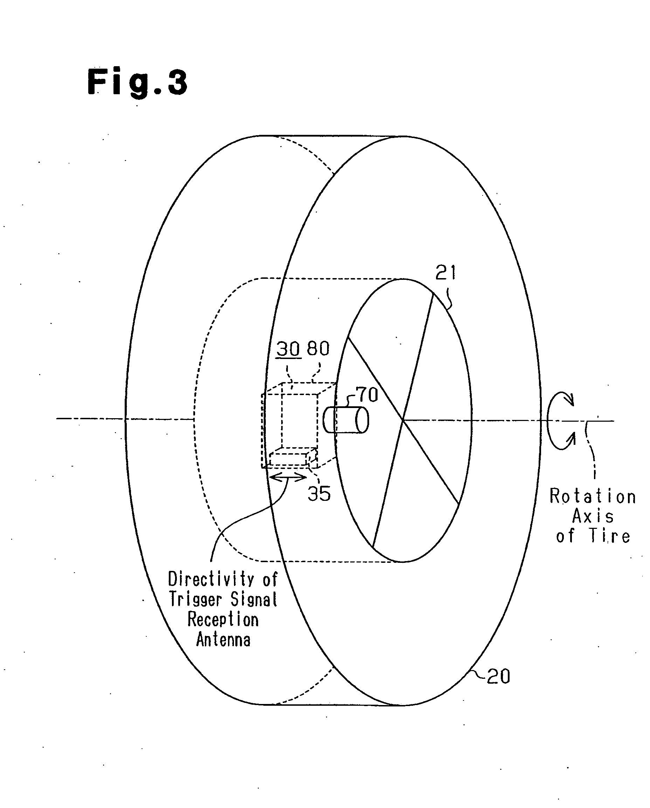

As shown in Fig. 3, the wheel 21 of each tire 20 has a valve stem 70 through which air is fed to the tire 20. A casing 80 is attached to each valve stem 70 to be located inside the associated tire 20. Each casing 80 accommodates one of the transmitters 30. In each casing 80, the longitudinal direction of the trigger signal reception antenna 35 of the transmitter 30 is parallel to the rotation axis of the tire 20. In other words, the trigger signal reception antenna 35 has a directivity the orientation of which is parallel to the rotation axis of the tire 20. Thus, the orientation of the directivity of the trigger signal reception antenna 35 is always parallel to the rotation axis of the tire 20, and is not varied according to the rotation angle of the tire 20.

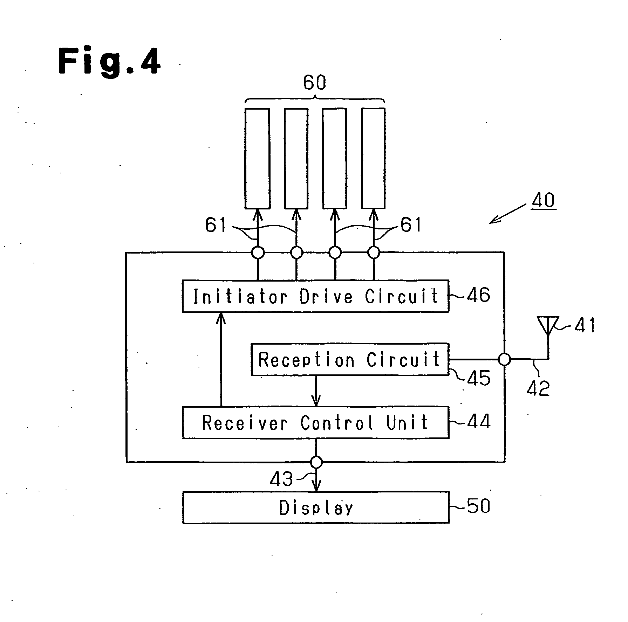

As shown in Fig. 4, the receiver 40 includes a reception antenna 41, a receiver control unit 44, a reception circuit 45, and an initiator drive circuit 46. The receiver control unit 44 is, for example, a microcomputer that includes a CPU, a ROM, and a RAM, and processes transmission data received through the reception antenna 41.

The reception circuit 45 receives transmission data that is wirelessly transmitted by each transmitter 30 through the reception antenna 41. The reception circuit 45 then demodulates and decodes the received data, and sends the data to the receiver control unit 44.

Based on the received data, the receiver control unit 44 obtains the internal pressure of the tire 20 that is associated with the transmitter 30 that is the source of the received data, and controls the display 50 to show air pressure data. When there is an abnormality in the internal pressure of the tire 20, warning is shown on the display 50.

The initiator drive circuit 46 is controlled by the receiver control unit 44 and drives the initiators 60 such that the initiator 60 transmits trigger signals at predetermined time intervals (for example, every fifteen seconds). The initiator drive circuit 46 drives the initiators 60 such that timing at which the initiators 60 transmit trigger signals is regulated such that each initiator 60 performs transmission at timing different from those of the other initiators 60. Therefore, two or more of the initiators 60 do not transmit trigger signals simultaneously.

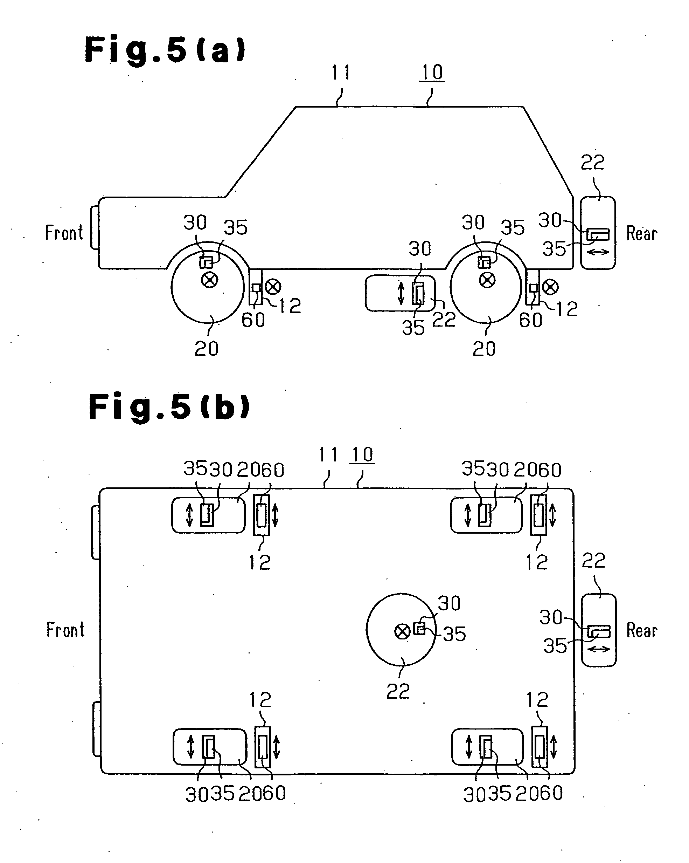

As described above, the orientation of the directivity of each trigger signal reception antenna 35 and the orientation of the directivity of each initiator 60 are parallel to the rotation axis of the corresponding tire 20. That is, as shown in Fig. 5(b), the orientation of the directivity of the trigger signal reception antennas 35 and the orientation of the directivity of the initiators 60 coincide with the transverse direction of the vehicle 10.

When the vehicle 10 is moving, the relative positions of the trigger signal reception antenna 35 of each transmitter 30 and the corresponding initiator 60 are varied according to the rotation angle of the corresponding tire 20. If the orientation of the directivity of each trigger reception antenna 35 does not coincide with the orientation of the directivity of the corresponding initiator 60, the sensitivity of the trigger signal reception antenna 35 is varied according to the rotation angle of the tire 20. However, in this embodiment, since the orientation of the directivity of each trigger reception antenna 35 coincides with the orientation of the directivity of the corresponding initiator 60, the sensitivity of the trigger signal reception antenna 35 is maintained to a satisfactory level irrespective of the rotation angle of the tire 20. Accordingly, the trigger signal reception antenna 35 of each transmitter 30 reliably receives trigger signals from the corresponding initiator 60 irrespective of the rotation angle of the corresponding tire 20.

As shown in Figs. 5 (a) and 5(b), a passenger vehicle is generally equipped with a spare tire 22 in case of a flat tire. The spare tire 22 is typically attached to the rear or lower side of the vehicle 10. Not only the four tires 20 that are mounted to the vehicle 10, but also the spare tire 22 may be provided with a transmitter 30.

The size of the spare tire 22 can be the same as or different from that of the other tires 20 mounted to the vehicle 10. When the spare tire 22 is smaller than the other tires 20, the spare tire 22 is only for emergency use and is not used for an extended period of time. Such a spare tire 22, which is smaller than the other tires 20, is typically applied to general passenger vehicles other than recreational vehicles. In some recreational vehicles, the size of the spare tire 22 is the same as the tires 20 mounted to the vehicle 10. This is because an appropriate drive force cannot be obtained when the vehicle travels off road if the size of the spare tire 22 is small. The spare tire 22 of this type is likely to be used for a longer period of time compared to the spare tire 22 that is smaller than the other tires 20. Therefore, a transmitter 30 is preferably provided in the spare tire 22 having the same size as the other tires 20 compared to the spare tire 22 having a smaller size than the other tires 20. However, a transmitter 30 may be provided in any type of spare tires 22.

When a transmitter 30 is provided in the spare tire 22, the trigger signal reception antenna 35 of the transmitter 30 in the spare tire 22 is likely to receive trigger signals from the initiators 60. However, the possibility of reception can be reduced by differentiating the orientation of the directivity of the trigger signal reception antenna 35 of the transmitter 30 in the spare tire 22 from the orientation of the directivity of the initiators 60. For example, when a transmitter 30 is provided in the spare tire 22 located at the rear of the vehicle 10 as shown in Figs. 5(a) and 5(b), the transmitter 30 may be attached to the spare tire 22 such that the orientation of the directivity of the trigger signal reception antenna 35 coincides with the longitudinal direction of the vehicle 10. Also, when a transmitter 30 is provided in the spare tire 22 located at the lower side of the vehicle 10, the transmitter 30 may be attached to the spare tire 22 such that the orientation of the directivity of the trigger signal reception antenna 35 coincides with the vertical direction of the vehicle 10. In each of these cases, the orientation of the directivity of the trigger signal reception antenna 35 of the transmitter 30 in the spare tire 22 is perpendicular to the orientation of the directivity of the initiators 60, and the sensitivity of the trigger signal reception antenna 35 of the spare tire 22 is the lowest. Therefore, the trigger signal reception antenna 35 is very unlikely to receive trigger signals from the initiators 60.

Since the orientation of the directivity of the trigger signal reception antennas 35 of the transmitters 30 in the tires 20 and the orientation of the directivity of the initiators 60 both coincide with the transverse direction of the vehicle 10, a trigger signal transmitted from each initiator 60 is received not only by the trigger signal reception antenna 35 of the corresponding transmitter 30, but also by the trigger signal reception antennas 35 of the other transmitters 30. To cope with this, radio waves of lower frequencies (30 kHz to 300 kHz), for example, radio waves of 125 kHz, are used for trigger signals in this embodiment. The output of the initiator drive circuit 46 is easily restricted when the trigger signal is in the long wavelength range. Thus, the transmission range of the trigger signal transmitted from each initiator 60 may be limited. That is, the output of the initiator drive circuit 46 is easily controlled such that a trigger signal from each initiator 60 is detected only by the trigger signal reception antenna 35 of the corresponding transmitter 30.

Detailed explanations regarding the front tires 20 will now be given. The front tires 20 are steered by manipulation of a steering wheel by the driver. Therefore, the orientation of the directivity of the trigger signal reception antenna 35 of the transmitter 30 in tire 20 of each front wheel is varied according to the manipulation of the steering wheel. Therefore, the trigger reception antenna 35 in each transmitter 30 may be replaced by an antenna assembly including three trigger reception antennas extending in directions perpendicular to one another, so that trigger signals are reliably received even if the orientation of the directivity is changed due to the steering wheel manipulation.

However, such antenna assemblies increase the size and weight of the transmitters 30, and also increase the manufacturing costs of the transmitters 30. Further, since the antenna assembly is substantially nondirectional and has a high sensitivity, the antenna assembly is likely to receive trigger signals from the initiators 60 other than the corresponding initiator 60 even if the output of the initiator drive circuit 46 is limited. If the transmitter 30 in the spare tire 22 has such an antenna assembly and receives a trigger signal, the transmitter 30 in the spare tire 22 wirelessly transmits transmission data containing the air pressure data of the spare tire 22. In such a case, the receiver 40 receives the transmission data from the transmitter 30 in the spare tire 22 in addition to the transmission data from the transmitters 30 of the four tires 20. At this time, if the transmission of the transmission data from the transmitter 30 in the spare tire 22 occurs simultaneously with the transmission of the transmission data from the transmitter 30 of any of the four tires 20, the transmission data from the transmitters 30 in the tire 20 is not properly received by the receiver 40 due to the interference. Therefore, it is undesirable to provide the transmitters 30 through the antenna assemblies.

Although there are slight differences according to the type of the vehicle 10, the amount of steering of the tires 20 of the front wheels is substantially constant. According to an experiment using a typical passenger vehicle, the sensitivity of the trigger signal reception antenna 35 of the transmitter 30 in each front tire 20 is hardly changed between a state where the front tires 20 are steered by approximately 20° and a state where the front tires 20 are not steered at all. In general, the vehicle 10 is not driven for an extended period of time with the front tires 20 steered by an angle no less than 20°. Further, while the vehicle 10 is driven, a period in which the front tires 20 are steered by a great amount to left or right is significantly shorter than a period in which the front tires 20 are hardly steered neither to left nor right. Therefore, most of trigger signals from each initiator 60 are received by the trigger signal reception antenna 35 of the corresponding transmitter 30 while the vehicle 10 is traveling in a straight line. That is, the trigger signal reception antenna 35 of the transmitter 30 in each front tire 20 is capable of receiving trigger signals from the corresponding initiator 60 without any trouble in practical use.

As described above, each casing 80 accommodating the transmitter 30 is attached to the valve stem 70 located inside the associated tire 20 (see Fig 3). The valve stem 70 is fitted in a valve bore (not shown) formed in the wheel 21. The valve stem 70 and the valve bore have dimensional errors created during production, and the angle of the casing 80 relative to the valve stem 70 includes an assembly error. Therefore, the orientation of the directivity of the trigger signal reception antenna 35 of each transmitter 30 can be deviated from a direction strictly parallel to the rotation axis of the corresponding tire 20. According to experiments, the sensitivity of each trigger signal reception antenna 35 remains satisfactory as long as the angle of the orientation of the directivity of the antenna 35 is within a range of approximately ±10° relative to the rotation axis of the tire 20. Therefore, the orientation of the directivity of each trigger signal reception antenna 35 does not need to be parallel to the rotation axis of the corresponding tire 20, as long as the angle of the orientation of the directivity of the antenna 35 is in a range within approximately ±10° relative to the rotation axis of the tire 20. Likewise, the orientation of the directivity of each trigger signal reception antenna 35 does not need to coincide with the orientation of the directivity of the corresponding initiator 60, as long as the angle of the orientation of the directivity of the antenna 35 is in a range within approximately ±10° relative to the orientation of the directivity of the initiator 60.

The operation of the tire condition monitoring apparatus 1 will now be described.

First, when the receiver control unit 44 causes any one of the initiators 60 to transmit a trigger signal, the trigger signal detection circuit 36 of the associated transmitter 30 detects the trigger signal through the trigger signal reception antenna 35. When detecting the trigger signal, the trigger signal detection circuit 36 sends to the transmitter control unit 31 a signal representing the detection of the trigger signal. Then, the transmitter control unit 31 controls the pressure sensor 32 to send air pressure data, which is obtained through measurement of the internal pressure of the tire 20, to the transmitter control unit 31. The transmitter control unit 31 controls the transmission circuit 33 to perform transmission every time the pressure sensor 32 completes a predetermined number of (e.g., forty cycles of) measurements. The transmission circuit 33 encodes and modulates the data sent from the transmitter control unit 31. The transmission circuit 33 then wirelessly transmits the data through the transmission antenna 34.

When the receiver 40 receives the data transmitted from the transmitter 30 through the reception antenna 41, the receiver 40 determines that the data was sent from that transmitter 30 in response to the trigger signal. In this manner, the receiver 40 is capable of identifying the position of the transmitter 30 that has transmitted the transmission data, that is, particular one of the tires 20 in which the transmitter 30 that has transmitted the data is located.

The present embodiment has the following advantages.

The casing 80 of each transmitter 30 is secured to the wheel 21 of the corresponding tire 20 such that the orientation of the directivity of the trigger signal reception antenna 35 of the transmitter 30 is parallel to the rotation axis of the tire 20. Thus, the orientation of the directivity of each trigger signal reception antenna 35 is always parallel to the rotation axis of the corresponding tire 20, and is not varied according to the rotation angle of the tire 20. Also, each initiator 60 is provided in the corresponding mudguard 12 such that the orientation of the directivity of the initiator 60 is parallel to the rotation axis of the corresponding tire 20. That is, the orientation of the directivity of each initiator 60 coincides with the orientation of the directivity of the corresponding trigger signal reception antenna 35. Therefore, the sensitivity of each trigger signal reception antenna 35 is always maintained to a satisfactory level regardless of the rotation angle of the corresponding tire 20. Accordingly, the trigger signal reception antenna 35 of each transmitter 30 reliably receives trigger signals from the corresponding initiator 60 irrespective of the rotation angle of the corresponding tire 20.

The orientation of the directivity of the trigger signal reception antenna 35 of the transmitter 30 in the spare tire 22 is perpendicular to the orientation of the directivity of the trigger signal reception antennas 35 of the transmitters 30 in the tires 20. Therefore, it is very unlikely that the trigger signal reception antenna 35 of the transmitter 30 in the spare tire 22 receives trigger signals from the initiators 60. Further, in a case where one of the tires 20 goes flat and replaced by the spare tire 22, and the tire 20 is carried at the rear or lower side of the vehicle 10, where the spare tire 22 has been carried, it is very unlikely that the trigger signal reception antenna 35 of the transmitter 30 in the removed tire 20 receives trigger signals from the initiators 60. On the other hand, the trigger signal reception antenna 35 of the transmitter 30 in the spare tire 22, which is mounted to the vehicle 10, readily receives trigger signals from the corresponding initiator 60.

It should be apparent to those skilled in the art that the present invention may be embodied in many other specific forms without departing from the spirit of scope of the invention. Particularly, it should be understood that the invention may be embodied in the following forms.

In the above embodiment, each initiator 60 is located in the mudguard 12. However, each initiator 60 may be located in a side spoiler or a rear under spoiler, which are formed of an insulating material such as polypropylene and an ABS resin. Alternatively, each initiator 60 may be located in a wheel housing.

If the vehicle 10 has side steps, each initiator 60 may be provided in a nonmetal portion of a side step, for example, in a resin mold.

The tire condition monitoring apparatus 1 may have a warning device that, when there is an abnormality in the pressure of any of the tires 20, indicates the abnormality by a sound. The warning device may be a speaker, which is mounted to the vehicle 10 as standard equipment.

Air pressure datawirelessly transmitted by each transmitter 30 may be data representing a specific value of the air pressure. Alternatively, the air pressure data may be data that simply indicates whether the air pressure is in a permissible range.

In addition to the pressure sensor 32, each transmitter 30 may include a temperature sensor for detecting the internal temperature of the corresponding tire 20. In this case, transmission data from each transmitter 30 contains temperature data related to the internal temperature of the corresponding tire 20.

Other than four-wheeled vehicles, the present invention may be applied to two-wheeled vehicles, such as bicycles and motorcycles, multi-wheeled busses, multi-wheeled trailers, and industrial vehicles, such as forklifts. When the present invention is applied to a trailer, the receiver 40 and the display 50 should be mounted to a tractor that pulls the trailer.

When the present invention is applied to a heavy vehicle such as a multi-wheeled truck, a bus, and a trailer, the initiators 60 may be provided in mudguards made of rubber. More specifically, each initiator 60 may be provided in a portion of a mudguard that is located closest to the corresponding tire 20.

Therefore, the present examples and embodiments are to be considered as illustrative and not restrictive and the invention is not to be limited to the details given herein, but may be modified within the scope and equivalence of the appended claims.

## Claims

1. A transmitter (30) for wirelessly transmitting data related to a condition of a tire (20) of a vehicle (10), the transmitter comprising:
a sensor (32) that is located in the tire and detects the condition of the tire;
a reception section (35) for receiving a trigger signal transmitted by an initiator (60), the initiator being located outside of the tire, wherein the reception section has a directivity in a predetermined orientation; and
a transmission section (31, 33, 34), wherein, when the reception section receives the trigger signal, the transmission section is triggered to wirelessly transmit the data related to the tire condition detected by the sensor, the transmitter being **characterized in that**:
the reception section is arranged relative to the tire such that the orientation of the directivity of the reception section is constant irrespective of a rotation angle of the tire.

2. The transmitter according to claim 1, **characterized in that** the tire has a rotation axis, and the angle of the orientation of the directivity of the reception section relative to the rotation axis of the tire is in a range of +10°.

3. The transmitter according to claim 2, **characterized in that** the orientation of the directivity of the transmitter is parallel to the rotation axis of the tire.

4. The transmitter according to any one of claims 1 to 3, **characterized in that** the initiator has a directivity in a predetermined orientation, and the angle of the orientation of the directivity of the reception section relative to the orientation of the directivity of the initiator is in a range of ±10°.

5. The transmitter according to claim 4, **characterized in that** the orientation of the directivity of the transmitter is parallel to the orientation of the directivity of the initiator.

6. The transmitter according to any one of claims 1 to 5, **characterized in that** the transmitter is a first transmitter, the vehicle is equipped with a spare tire (22) that is provided with a second transmitter (30), the second transmitter having the same configuration as the first transmitter, and wherein the orientation of the directivity of the reception section (35) in the first transmitter is different from the orientation of the directivity of the reception section (35) in the second transmitter.

7. The transmitter according to claim 6, **characterized in that** the orientation of the directivity of the reception section in the first transmitter is perpendicular to the orientation of the directivity of the reception section in the second transmitter.

8. An apparatus (1) for monitoring a condition of a tire (20) of a vehicle (10), comprising an initiator that is located outside of the tire and transmits a trigger signal, the transmitter according to any one of claims 1 to 7, and a receiver (40) for receiving data wirelessly transmitted by the transmitter.
